# EUROPÄISCHE PATENTSCHRIFT

(11) **EP 1 004 004 B1**
(45) Veröffentlichungstag und Bekanntmachung des Hinweises auf die Patenterteilung: **06.11.2002**
(21) Anmeldenummer: 98951167.0
(22) Anmeldetag: 10.08.1998
(51) Int. Cl.: G01D 15/22

(54) **VERFAHREN UND EINRICHTUNG ZUR ERZEUGUNG VON DRUCKPUNKTEN BEI EINEM PUNKTDRUCKER, INSBESONDERE EINEM PROZESSSCHREIBER**
DEVICE AND METHOD FOR PRODUCING PRINTED DOTS BY MEANS OF A DOT PRINTER, IN PARTICULAR IN A PROCESS VARIABLE RECORDER
DISPOSITIF ET PROCEDE PERMETTANT DE PRODUIRE DES POINTS D'IMPRESSION A L'AIDE D'UNE IMPRIMANTE PAR POINTS, EN PARTICULIER DANS UN ENREGISTREUR DE VARIABLES DE PROCESSUS

(30) Priorität: 13.08.1997 DE 19735121
(43) Veröffentlichungstag der Anmeldung: 31.05.2000
(73) Patentinhaber: ABB PATENT GmbH, 68309 Mannheim (DE)
(72) Erfinder: BRUHN, Arno, D-42489 Wülfrath (DE); KÖNNECKE, Dieter, D-41541 Dormagen (DE); VOCK, Frank, D-44575 Castrop-Rauxel (DE)
(74) Vertreter: Meissner, Peter E., Dipl.-Ing.
(86) Internationale Anmeldenummer: DE9802411
(87) Internationale Veröffentlichungsnummer: WO99009375

(56) Entgegenhaltungen:
- GB-A- 2 108 722
- US-A- 4 592 668
- "magnetic field lands plotter pencil-leads gently on the paper" DESIGN ENGINEERING,März 1987, Seiten 11-12, XP002089717 london uk
- "federabhebesteurung für x-y schreiber" ELEKTRONIK, Bd. 24, Nr. 12, Dezember 1975, Seiten 74-75, XP002089718

## Beschreibung

Die Erfindung betrifft ein Verfahren sowie eine Einrichtung zum Betrieb eines sogenannten Punktdruckers, wie er beispielsweise bei Prozeßschreibern eingesetzt wird, gemäß Oberbegriff der Patentansprüche 1 und 4.

Druckeinrichtungen bei Punktdruckern, insbesondere bei Prozeßschreibern, sowie Verfahren zum Betrieb derselben beziehen sich im allgemeinen auf ein elektromagnetisches Drucksystem. Dies besteht im wesentlichen aus einem Betätigungselement, einem sogenannten Solenoiden, welcher seinerseits aus Elektromagnet und Hubanker besteht. Wird der Solenoid mit elektrischem Strom beaufschlagt, so führt dies zu einer Hubbewegung des sogenannten Hubankers, um welchen der Solenoid angeordnet ist. Die Hubbewegung wird dabei im allgemeinen auf einen drehbar gelagerten Winkel übertragen, an deren einem Schenkel ein sogenannter Farbdocht angeordnet ist. Die Hubbewegung des Hubankers bewirkt eine Kippbewegung des Winkels in dem besagten Druckkopf, wodurch sich der Farbdocht auf das Papier absenkt. Die Strombeaufschlagung des Solenoiden ist nur kurzzeitig, so daß der Hubanker beispielsweise über Federmechanismen wieder zurückgeholt wird. Gleiches gilt für den Winkel des Druckkopfes, so daß sich der Farbdocht sofort wieder vom Papier abhebt. Darüber hinaus gibt es Drucksysteme, die über sogenannte Klappanker verfügen. Dabei ist der Solenoid mit einem feststehenden Ankerelement versehen, welches über einen Luftspalt zu einem sogenannten Klappanker, d.h. einem zweiten magnetischen Segment beabstandet angeordnet ist. Bei Strombeaufschlagung bewirkt das Feld im Luftspalt, daß der Klappanker, d.h. das entsprechende Druckkopfelement vom feststehenden Ankerelement des Solenoiden angezogen wird. Bei entsprechender Umlenkung dieser Bewegung kann auch dies in eine Druckkopfabsenkung des Farbdochtes umgesetzt werden.

Bei sogenannten Punktdruckern soll der Farbdocht keine Linien zeichnen, sondern lediglich die besagten Punkte auf dem Papier der Schreibwalze erzeugen. Demzufolge wird der Solenoid immer nur kurzzeitig, d.h. von Strompulsen durchflossen.

Gleich in welcher Art und Weise letztendlich durch kurzzeitige Strombeaufschlagung des Solenoiden der Druckpunkt erzeugt wird, wird ursächlich jeweils immer ein kurzer Stromimpuls auf den Solenoiden gegeben.

Es ist bekannt, daß das entstehende Druckbild stets von einer Reihe von zum Teil auch mechanischen Parametern des Systems abhängt. Beim Einsatz solcher Punktdrucker in sogenannten Prozeßschreibern ist es jedoch notwendig, ein qualitativ gleichbleibendes Druckbild zu erhalten, um die einzelnen Prozeßlinien überhaupt deutlich voneinander unterscheiden zu können. Beim Einsatz farbiger Punktschreiber ist es wichtig, daß die Farbintensität zur deutlichen Unterscheidung der einzelnen Schreiberlinien voneinander dauerhaft gleich bleibt.

Verändern sich jedoch Umgebungsbedingungen oder die Füllmengen in den Tintenpatronen oder andere mechanische oder teilmechanische Bedingungen, so verändert sich üblicherweise auch das Druckbild.

Der Erfindung liegt somit die Aufgabe zugrunde, hinsichtlich eines Verfahrens sowie einer Einrichtung zum Betrieb eines Punktdruckers der gattungsgemäßen Art eine Verbesserung dahingehend vorzuschlagen, daß auf die Druckqualität als solches am Gerät von außen eingegriffen werden kann.

Die gestellte Aufgabe wird bei einem Verfahren der gattungsgemäßen Art erfindungsgemäß durch die kennzeichnenden Merkmale des Anspruches 1 gelöst.

Weitere vorteilhafte Ausgestaltungen des erfindungsgemäßen Verfahrens sind in den abhängigen Ansprüchen 2 und 3 dargestellt.

Hinsichtlich einer Einrichtung der gattungsgemäßen Art ist die gestellte Aufgabe erfindungsgemäß durch die kennzeichnenden Merkmale des Patentanspruches 4 gelöst. Weitere vorteilhafte Ausgestaltungen der einrichtungsgemäßen Erfindung sind in den übrigen Ansprüchen dargestellt.

Der Kern der vorliegenden Erfindung besteht darin, daß von außen, d.h. dem Bediener ermöglicht wird, auf die Pulsdauer, d.h. die Zeit der Strombeaufschlagung des Betätigungssolenoiden Einfluß zu nehmen. Durch die Einflußnahme auf die Pulsdauer der besagten Strombeaufschlagung besteht in erfindungsgemäßer Weise eine direkte Beeinflussung der Druckintensität. Auf diese Weise können sich ergebende Veränderungen von außen durch Einflußnahme auf die Pulsdauer beeinflußt bzw. beseitigt werden.

In weiterer vorteilhafter Ausgestaltung der Erfindung werden die von den Sensorelementen oder von sonstwie verfügbaren Parametern vorliegende Daten während des Schreibprozesses in einem nichtflüchtigen Speicherelement **(EEPROM)** abgespeichert. Die auf das Druckbild wirkenden Parameter sind
- die Rückstellkraft des Winkels zur Ruhestellung, definiert durch Material und Form,
- Abstand der Schreibspitzen vom Papier,
- Geometrie des Betätigungshebels,
- Strom, der durch den Solenoiden fließt,
- Pulszeit, mit der der Solenoid erregt wird.

Bis auf die letzte Größe, nämlich die Pulszeit, sind alle übrigen Parameter zum Teil fertigungsbedingt vorgegeben. Somit ist die wesentliche, für das Druckbild maßgebliche Größe die Pulszeit. Diese wird im übrigen durch die Software des Gerätes kontrolliert. Über die Variation der Pulszeit wird die Energie auf den Hubanker und damit auf den Farbdocht verändert und damit die Farbintensität von " druckt gar nicht" bis "Sättigung" verändert. Da, wie oben gesagt, alle übrigen Parameter fertigungsbedingt voreingestellt sind oder in erfindungsgemäßer Weise fixiert werden, bleibt als einzige variable Größe für die Bestimmung des Druckbildes bzw. der Druckintensität die besagte Pulszeit, mit der der Solenoid beaufschlagt wird. Die Einflußnahmemöglichkeit auf die Pulszeit kann beispielsweise so gewählt sein, daß auf einem Bedienelement ein Tastknopf vorgesehen ist, über welchen der Bediener die Pulszeit in geeigneten Schrittweiten nach unten oder oben ändern kann. Das Ergebnis seiner Veränderung sieht er, wenn er die Veränderung während des Schreibprozesses vornimmt, sofort. In weiterer Ausgestaltung sowohl des Verfahrens als auch der Einrichtung ist es in erfindungsgemäßer Weise vorteilhaft, die Parameter, die für die Druckqualität verantwortlich sind, sofern sie dennoch variabel und über Sensoren erfaßbar sind, in einem nichtflüchtigen Speicherelement abzulegen. Dieses Datenfeld kann dabei in erfindungsgemäß zweckmäßiger Weise adaptiv angelegt werden. Dies bedeutet, daß sich das System optimale Einstellungen verschiedener Parameterkombinationen abspeichern kann und mit der jeweils optimalsten Einstellung selbsttätig eine Grundeinstellung vornimmt, von der aus der Bediener dann außen in erfindungsgemäßer Weise durch Tasterbetätigung Einfluß nehmen kann. Die jeweils optimierte Einstellung kann dann wiederum gespeichert werden.

Durch diese Einstellmöglichkeit ergeben sich die Vorteile, daß über die nach außen geführte Eingriffnahme bzw. dem besagten außen am Gerät angeordneten Tastschalter der Anwender die Druckintensität je nach Aufgabenstellung verändern kann. Zum Beispiel bei vielen Texten ist eine geringere Farbintensität vorteilhaft. Da die Standzeit steigt und die zum Teil ineinander geschriebenen Texte besser lesbar bleiben, ist natürlich die Veränderbarkeit der Farbintensität erheblich vorteilhaft. Es kann jedoch auch die Maßgabe entstehen, dickere Strichdicken zu wählen, um die Ablesbarkeit aus größerer Entfernung zu gewährleisten. Auch dies ist durch die Einstellbarkeit der Farbintensität in der erfindungsgemäßen Weise gegeben. Bei einem verwendeten Druckkopf mit beispielsweise sechs Farben besitzen die einzelnen Betätigungshebel leicht unterschiedliche Geometrien. Durch die Variation der Pulszeit von Farbe zu Farbe sind unabhängig von den Hebellängen identische Farbsättigungen erzielbar. Dies gilt für den Fall, daß beim Einsatz der Erfindung die Einstellbarkeit der Pulsdauer natürlich für jede Einzelfarbe getrennt möglich ist.

Die Erfindung ist in der Zeichnung dargestellt und nachfolgend näher beschrieben.

Es zeigt:
- Fig. 1: Darstellung der Pulszeit in Verbindung mit einer korrelierten Darstellung der aufgewendeten elektrischen Energie.
- Fig. 2: Druckkopf und Betätigungseinrichtung eines Punktdruckers.
- Fig. 3: Prinzip Blockschaltbild des erfindungsgemäßen Systems.

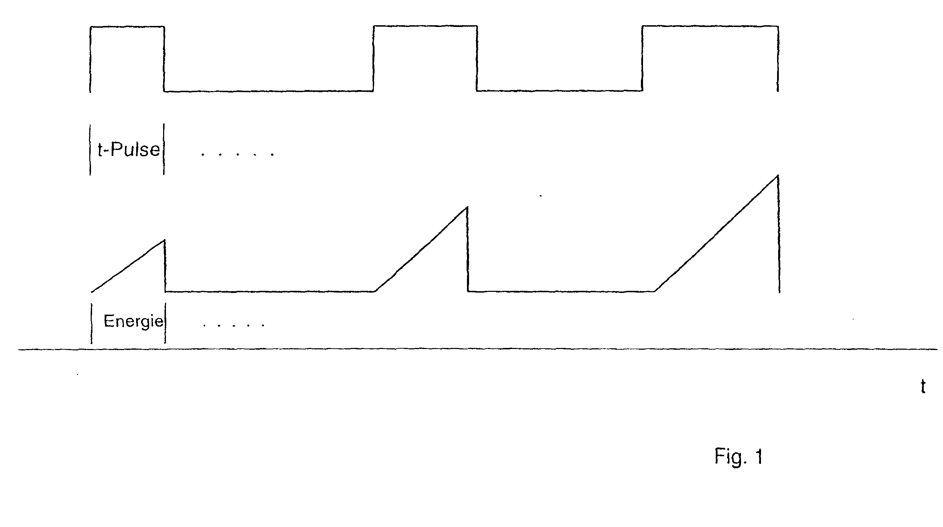

Figur 1 zeigt eine Sequenz mit unterschiedlich langen Pulszeiten. Dies zeigt der obere Rechteckpulsverlauf. Da der besagte Schreiber keine durchgehenden Linien, sondern Linien in Form von einer Vielzahl von Punkten erstellt, wird der Solenoid auch immer nur über eine kurze Zeit betätigt bis zum nächsten Druckpunkt. Der untere Verlauf zeigt in Korrelation dazu die dem System damit erteilte Energie, die im Mittel natürlich linear mit der Zeit wächst. Je höher die Pulsdauer, um so größer das in das Drucksystem eingebrachte jeweilige Energiepaket.

Somit läßt sich über die Veränderung der Pulszeit t auch eine Veränderung der eingebrachten Energie und damit letztendlich die im Druckprozeß erreichte Druckintensität variieren.

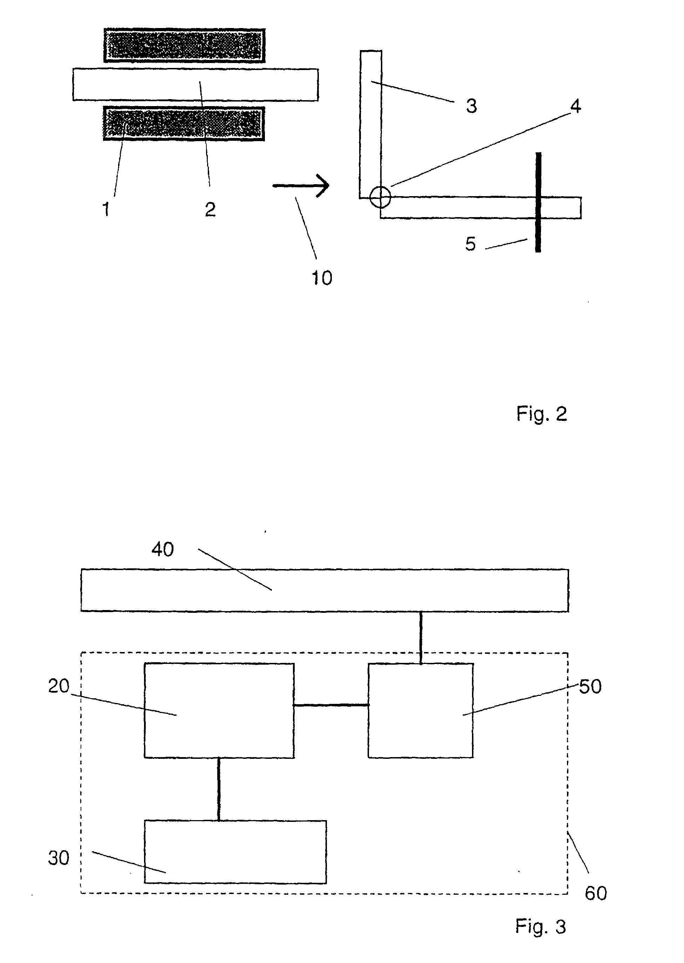

Figur 2 zeigt ein mehr oder weniger herkömmliches System bestehend aus einem feststehenden Solenoiden 1 mit hubmäßig veränderbarem Anker 2. Dieser Hubanker 2 betätigt kurzzeitig den Winkel 3 eines Druckkopfes um seinen Drehpunkt 4, an deren einem Schenkel der Farbdocht 5 angeordnet ist. Durch kurze Stoßbetätigung des Hubankers 2 erfolgt eine Übertragung einer Kippbewegung auf den Winkel 3 und damit auf den Farbdocht 5, der sich kurzzeitig auf das Papier oder das Druckmedium absenkt. Wird nunmehr die auf den Druckkopf erteilte Energie durch eine Erhöhung der Pulsdauer gemäß der in Figur 1 dargestellten Weise verändert, so wird letztendlich dem Druckkopf und damit auch dem Farbdocht 5 ebenfalls eine höhere Energie aufgeprägt. Dies setzt sich dann in eine höhere Druckintensität um. Dies gilt natürlich auch in umgekehrter Richtung, wenn nämlich durch Verkürzung der Pulsdauer die Druckintensität vermindert werden soll.

Figur 3 zeigt in Form eines symbolischen Blockschaltbildes die Einzelelemente, die bei der Erfindung verwendet werden. Das eigentliche, bereits durch Figur 1 beschriebene und dargestellte Drucksystem 30 steht in elektrischer d.h. datenmäßiger Verbindung zu einem Mikroprozessorsystem 20. Dieses Mikroprozessorsystem 20 ist über ein Speicherelement 50 mit einer Eingabeschnittstelle 40, beispielsweise in Form einer Tastatur verbunden. Diese enthält somit in erfindungsgemäßer Weise auch einen oder mehrere Tastknöpfe, mit denen der Bediener Einfluß auf die oben beschriebene Pulszeit nehmen kann.
Sicherlich sind auch an bekannten Punktdruckern außen am Gehäuse Tastaturen angeordnet. Die erfindungsgemäße Eingabeschnittstelle weist jedoch eine Eingabemöglichkeit einer beleibigen gewünschten Pulsdauer auf, die von außen zugänglich, d.h. außen am Schreibergehäuse angeordnet ist. Dieses Speichersystem enthält nichtflüchtige Datenspeicher, **EEPROM**, und kann adaptiv angelegt sein. Das bedeutet, daß optimierte Parameter für jeden Betriebszustand abgelegt sein können, und die dann je nach wiederholt hergestelltem Betriebszustand abgerufen werden können. Diese abrufbaren Parameter sind jeweils dann als Grundeinstellung zu verstehen, auf die der Bediener in der erfindungsgemäßen Weise wiederum eingreifen kann, indem er lediglich die Pulszeiten verändert.

Insgesamt ist das System eingebunden in sogenannte Prozeßschreiber, die im Einlinien- oder Mehrlinienverfahren arbeiten.

## Patentansprüche

1. Verfahren zur Erzeugung von Druckpunkten bei einem Punktdrucker, bei welchem ein Betätigungsglied von einer Elektronik zur Erzeugung eines jeweiligen Druckpunktes mittels eines Strompulses angesteuert wird,
**dadurch gekennzeichnet,**
**daß** die Druckpunktintensität über eine Änderung der Dauer des Strompulses von außerhalb des Punktdruckers eingestellt wird.

2. Verfahren zur Einstellung der Druckparameter bei einem Punktdrucker, nach Anspruch 1,
**dadurch gekennzeichnet,**
**daß** weitere Druckparameter gemeinsam mit der jeweilig eingestellten Strompulsdauer korreliert und in einem nichtflüchtigen Speicherelement als Parametersätze abgespeichert sind bzw werden.

3. Verfahren zur Einstellung der Druckparameter bei einem Punktdrucker, nach Anspruch 2,
**dadurch gekennzeichnet,**
**daß** die weiteren Druckparameter folgende sind:
- Rückstellkraft des eigentlichen Betätigungselementes des Betätigungsgliedes und / oder
- Abstand der Schreibspitzen vom Aufzeichnungsträger, und / oder
- Geometrie des Betätigungselementes, und / oder
- durch das Betätigungselement fließende mittlere Stromstärke.

4. Punktdrucker insbesondere Punktschreiber zur Aufzeichnung von Prozeßdaten, mit einem innerhalb eines Gehäuses angeordneten elektrisch oder elektromechanisch pulsweise ansteuerbarem Drucksystem, beispielsweise in Form eines Hubankers und eines hierüber betätigbaren Kippwinkels mit Schreibspitze,
**dadurch gekennzeichnet,**
**daß** außen am Gehäuse (60) oder außerhalb des Gehäuses (60) eine Eingabeschnittstelle (40) beispielsweise in Form eines oder mehrerer Taster angeordnet ist, über welche von außen die Dauer des Strompulses einstellbar ist.

5. Punktdrucker insbesondere Punktschreiber zur Aufzeichnung von Prozeßdaten, nach Anspruch 4,
**dadurch gekennzeichnet,**
**daß** der Punktdrucker ein Speichersystem (50) enthält, in welchem eine Mehrzehl von Druckparametern in Abhängigkeit von diskreten Pulsdauern abspeicherbar ist.

## Claims

1. Method of producing printed dots in a dot printer, in which an actuating member of an electronic device for producing a respective printed dot is triggered by means of a current pulse,
**characterized in**
**that** the printed dot intensity is adjusted by changing the duration of the current pulse from outside of the dot printer.

2. Method of adjusting the printing parameters in a dot printer, according to claim 1,
**characterized in**
**that** further printing parameters are correlated jointly with the current pulse duration adjusted in each case and are stored as parameter sets in a nonvolatile storage element.

3. Method of adjusting the printing parameters in a dot printer, according to claim 2,
**characterized in**
**that** the further printing parameters are as follows:
- restoring force of the actual actuating element of the actuating member
and/or
- distance of the recording styli from the recording carrier,
and/or
- geometry of the actuating element,
and/or
- mean intensity of the current flowing through the actuating element.

4. Dot printer, in particular a dotted-line recording instrument for recording process data, having a printing system, e.g. in the form of a lifting armature and a tilting angle member with recording stylus actuable thereby, which printing system is disposed inside a housing and is electrically or electromechanically triggerable in a pulsed manner,
**characterized in**
**that** disposed on the outside of the housing (60) or externally of the housing (60) is an input interface (40) e.g. in the form of one or more pushbuttons, by means of which the duration of the current pulse is externally adjustable.

5. Dot printer, in particular a dotted-line recording instrument for recording process data, according to claim 4,
**characterized in**
**that** the dot printer comprises a storage system (50) for storing a plurality of printing parameters in dependence upon discrete pulse durations.

## Revendications

1. Procédé destiné à la génération de points d'impression d'une imprimante par points, dans lequel un organe d'actionnement est commandé par une électronique au moyen d'une impulsion de courant afin de générer les points d'impression respectifs,
**caractérisé en ce que** l'intensité des points d'impression est réglée à partir de l'extérieur de l'imprimante par points par une modification de la durée de l'impulsion de courant.

2. Procédé destiné au réglage des paramètres d'impression d'une imprimante par points selon la revendication 1,
**caractérisé en ce que** d'autres paramètres d'impression sont mis en corrélation avec la durée de l'impulsion de courant respectivement réglée, et sont ou seront mémorisés en tant que blocs de paramètres dans un élément de mémorisation non volatil.

3. Procédé destiné au réglage des paramètres d'impression d'une imprimante par points selon la revendication 2,
**caractérisé en ce que** les autres paramètres d'impression sont les suivants :
- la force de rappel de l'élément d'actionnement proprement dit de l'organe d'actionnement, et/ou
- l'écartement des pointes d'impression par rapport au support d'impression, et/ou
- la géométrie de l'élément d'actionnement, et/ou
- l'intensité du courant qui passe à travers 1'élément d'actionnement.

4. Imprimante par points, notamment enregistreur par points, destinée à l'enregistrement de données de processus, comportant un système d'impression pouvant être commandé électriquement ou par voie électromécanique disposé à l'intérieur d'un carter, par exemple sous la forme d'un induit poussoir et d'une équerre basculante avec des pointes d'impression pouvant être actionnée par ce dernier,
**caractérisée en ce qu'**une interface d'entrée (40), par exemple sous la forme d'une ou de plusieurs touches, est disposée sur l'extérieur du carter (60) ou en dehors du carter (60), par l'intermédiaire de laquelle la durée de l'impulsion de courant peut être réglée à partir de l'extérieur.

5. Imprimante par points, notamment enregistreur par points, destinée à l'enregistrement de données de processus selon la revendication 4,
**caractérisée en ce que** l'imprimante par points contient un système de mémorisation (50), dans lequel plusieurs paramètres d'impression peuvent être mémorisés en fonction de durées d'impulsions discrètes.
